# EUROPEAN PATENT APPLICATION

(11) **EP 3 872 429 A1**
(43) Date of publication of application: **01.09.2021**
(21) Application number: 20210281.0
(22) Date of filing: 27.11.2020
(51) Int. Cl.: F25D 23/00, F25D 23/06, F16L 3/00

(54) **A REFRIGERATOR COMPRISING A VACUUM INSULATION PANEL**

(30) Priority: 16.12.2019 TR 201920306
(71) Applicant: Arçelik Anonim Sirketi, 34445 Istanbul (TR)
(72) Inventor: ONER, Tugce, 34445 ISTANBUL (TR); ERCAN, Veysi, 34445 ISTANBUL (TR); TOSUN, Mert, 34445 ISTANBUL (TR); YANIK, Ibrahim, 34445 ISTANBUL (TR); AKSIN, Yasin, 34445 ISTANBUL (TR)

(57) **Abstract**

Refrigerator (1) comprising an inner lining (5); an outer wall (6); an insulation volume (7) which is provided between the inner lining (5) and the outer wall (6) and wherein polyurethane is injected; at least one insulation panel (8) which is placed into the insulation volume (7); a refrigeration system having a refrigerant tube (10) which enables the refrigerant to be circulated; and at least one retaining apparatus (12) which supports the part of the refrigerant tube (10) extending between the inner lining (5) and the outer wall (6).

## Description

The present invention relates to a refrigerator which comprises a vacuum insulation panel.

In a refrigerator, preferably polyurethane foam is applied, as insulation material, between the inner lining and the outer wall which form the body. It is also a common practice to use vacuum insulation panels between the inner lining and the outer wall in the refrigerator in order to improve the thermal insulation, and thus, to decrease the energy consumption and increase the rigidity of the body. The vacuum insulation panel is formed by vacuuming and enclosing a barrier film around a rigid core such as glass fiber, silica, pearlite, aerogel, etc. The barrier film is composed of polymeric layers including polyethylene terephthalate (PET), ethylene vinyl alcohol (EVOH) or polyamide (PA) and of metal foil layers such as aluminum. During the production of the refrigerator, the vacuum insulation panel is fixed to the body before the polyurethane injection process. Since the vacuum insulation panel is adhered to the inner surface of the outer wall of the refrigerator body which is generally metal by means of double-sided tape, etc., polyurethane cannot be injected between the vacuum insulation panel and the outer wall. During the production, in some cases, the vacuum panel cannot be prevented from displacing until the polyurethane is injected into the body, and polyurethane cannot reach to the desired regions, adversely affecting the insulation performance. Furthermore, a damage such as tear, piercing, etc. which may occur during the production disrupts the vacuum structure of the vacuum insulation panel, and results in the loss of vacuum performance.

The Patent Application No. EP3467415(A1) relates to a refrigerator comprising a vacuum insulation panel which is fixed at the edges thereof by means of retaining clips.

The Utility Model Application No. CN201811530 (U) relates to a vacuum insulation panel fixing structure which is used in a refrigerator.

The Utility Model Application No. CN201476452 (U) relates to a vacuum insulation panel support structure which is used in a refrigerator.

The aim of the present invention is the realization of a refrigerator wherein the vacuum insulation panel is prevented from being damaged during the production and the insulation performance is improved.

In the refrigerators, the vacuum insulation panel is placed into the insulation volume between the metal outer wall which is covered onto the outer surface of the body and the plastic inner lining which surrounds the fresh food compartment and the freezer compartment in the body, and furthermore, polyurethane is injected into said insulation volume.

The refrigerator comprises at least one retaining apparatus which supports the part of the refrigerant tube, which is a component of the cooling system, extending between the inner lining and the outer wall, preferably between the evaporator and the compressor.

The retaining apparatus is in the form of an impeller or a star with a plurality of blades, and also has at least one passage which enables the polyurethane injected into the space between the inner lining and the outer wall to spread.

The retaining apparatus used in the refrigerator of the present invention supports the refrigerant tube as well as the vacuum insulation panel placed between the inner lining and the outer wall.

The retaining apparatus supports the vacuum insulation panel by means of a retaining member in the form of a rectangular plate or a U, which is placed onto at least two blades and which comprises a contact surface whereon the vacuum insulation panel is adhered.

The refrigerator realized in order to attain the aim of the present invention is illustrated in the attached figures, where:

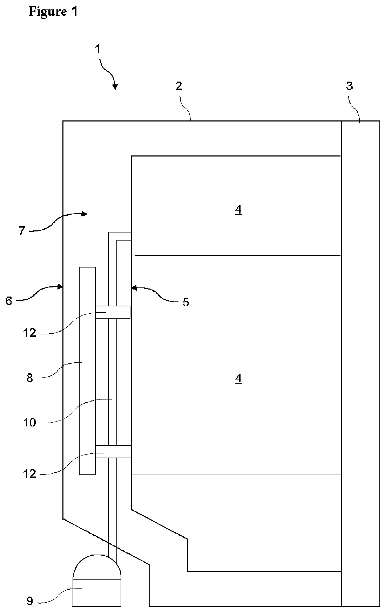

Figure 1 - is the schematic view of a refrigerator comprising the vacuum insulation panel.
Figure 2 - is the perspective view of the refrigerant tube and the vacuum insulation panel retaining apparatus.
Figure 3 - is the partial view of the vacuum insulation panel which is placed onto the retaining apparatus.
Figure 4 - is the perspective view of the retaining apparatus comprising a corner bracket.
Figure 5 - is the partial view of the vacuum insulation panel which is placed onto the retaining apparatus in Figure 4.
Figure 6 - is the perspective view of the retaining apparatus comprising the U-shaped retaining member.
Figure 7 - is the partial view of the vacuum insulation panel which is placed onto the retaining apparatus in Figure 6.

The elements illustrated in the figures are numbered as follows:
1. Refrigerator
2. Body
3. Door
4. Compartment
5. Inner liner
6. Outer wall
7. Insulation volume
8. Vacuum insulation panel
9. Compressor
10. Refrigerant tube
11. Passage
12. Retaining apparatus
13. Channel
14. Blade
15. Adhesion surface
16. Retaining member
17. Bracket

The refrigerator (1) comprises a body (2); at least one door (3); at least one fresh food/freezer compartment (4) wherein foodstuffs and beverages are placed; a plastic inner lining (5) which forms the inner surfaces of the body (2) and the doors (3) facing the compartments (4); an outer wall (6) which forms the outer surfaces of the body (2) and the doors (3); an insulation volume (7) which is disposed between the inner lining (5) and the outer wall (6) and wherein polyurethane (PU) is injected; and at least one vacuum insulation panel (8) placed into the insulation volume (7). The refrigerator (1) further comprises a refrigeration system composed of a compressor (9) which performs the refrigeration cycle, at least one condenser (not shown in the figures), at least one evaporator (not shown in the figures) and a refrigerant tube (10) which enables the refrigerant fluid to be circulated.

The refrigerator (1) of the present invention comprises at least one retaining apparatus (12) which supports the part of the refrigerant tube (10) extending between the inner lining (5) and the outer wall (6), preferably between the evaporator and the compressor (9), which has at least one passage (11) which enables the polyurethane injected into the space between the inner lining (5) and the outer wall (6) during the production to spread, and which supports the vacuum insulation panel (8) placed between the inner lining (5) and the outer wall (6) in addition to the refrigerant tube (10).

In an embodiment of the present invention, the retaining apparatus (12) comprises a cylindrical channel (13) which is arranged at the hub thereof and which grips the refrigerant tube (10).

In another embodiment of the present invention, the retaining apparatus (12) is in the form of an impeller, and comprises a plurality of, preferably 6 blades (14) separated by 60-degree angles, which extend outwards in the radial direction from the channel (13) and which have the passages (11) therebetween. In another embodiment of the present invention, the retaining apparatus (12) is in the form of a hexagram.

In another embodiment of the present invention, the retaining apparatus (12) comprises a retaining member (16) which is placed onto at least two blades (14), which has an adhesion surface (15) whereon the vacuum insulation panel (8) is seated and which supports the vacuum insulation panel (8). Thereby, the retaining apparatus (12) is enabled to support the refrigerant tube (10) as well as the vacuum insulation panel (8). Furthermore, the sharp edges of the blades (14) of the retaining apparatus (12) are prevented from contacting the vacuum insulation panel (8), and the risk of damaging the barrier film which surrounds the vacuum insulation panel (8) is eliminated.

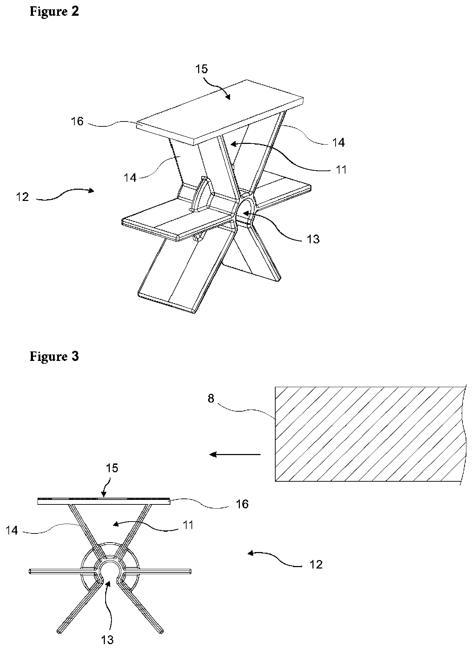

In another embodiment of the present invention, the retaining member (16) is in planar form, preferably in the form of a rectangular plate onto the top surface of which the vacuum insulation panel (8) is placed (Figure 2).

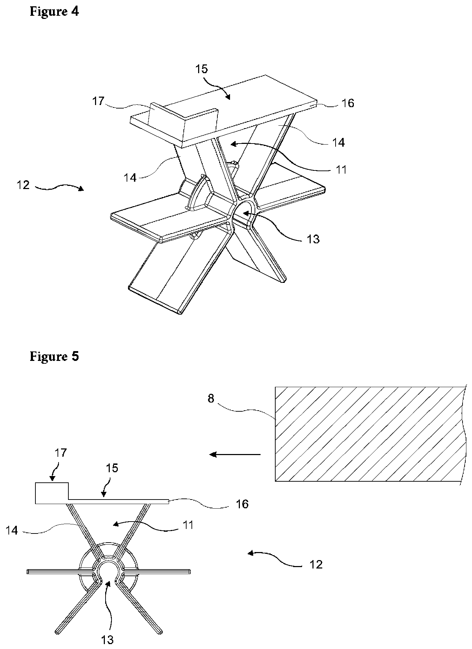

In another embodiment of the present invention, the retaining apparatus (12) comprises a bracket (17) which is provided on the plate-shaped retaining member (16) and which bears against one of the corners of the vacuum insulation panel (8) so as to prevent the same from displacing (Figure 4).

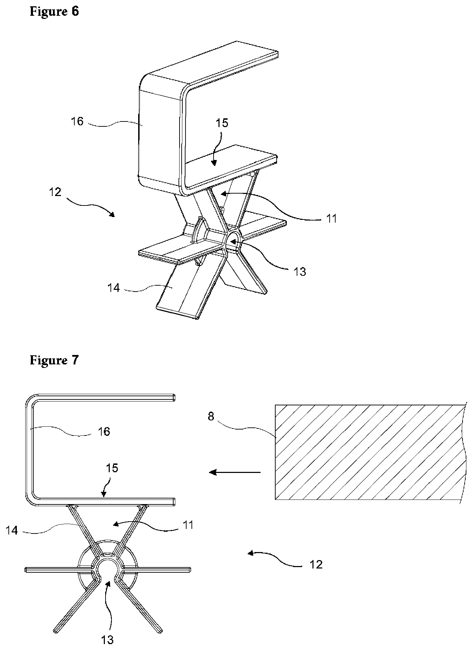

In another embodiment of the present invention, the retaining member (16) is in the form of a U which grips the top and bottom surfaces of the vacuum insulation panel (8) from an edge (Figure 6).

In the refrigerator (1) of the present invention, by means of the retaining apparatus (12), the need for adhering the vacuum insulation panel (8) to the outer wall (6) or the inner lining (5) by means of a double-sided tape is eliminated. The vacuum insulation panel (8) can be placed into the insulation volume (7) without touching the inner lining (5) and the outer wall (6). The polyurethane injected into the insulation volume (7) contacts both the bottom and top surfaces of the vacuum insulation panel (8). In other words, polyurethane can be injected both between the vacuum insulation panel (8) and the inner lining (5) and between the vacuum insulation panel (8) and the outer wall (6). The retaining member (16) supports both the vacuum insulation panel (8) and the refrigerant tube (10). The vacuum insulation panel (8) is prevented from being damaged during the production. The vacuum insulation panel (8) which is an expensive component is prevented from being discarded, improving production costs. The vacuum insulation panel (8) can be fixed in a stable manner into the insulation volume (7) of the body (2) of the refrigerator (1). The insulation performance of the refrigerator (1) is increased, decreasing energy consumption.

## Claims

1. A refrigerator (1) comprising a body (2); at least one door (3); at least one fresh food/freezer compartment (4) wherein foodstuffs and beverages are placed; a plastic inner lining (5) which forms the inner surfaces of the body (2) and the doors (3) facing the compartments (4); an outer wall (6) which forms the outer surfaces of the body (2) and the doors (3); an insulation volume (7) which is disposed between the inner lining (5) and the outer wall (6) and wherein polyurethane (PU) is injected; at least one vacuum insulation panel (8) placed into the insulation volume (7); and a compressor (9), a condenser, at least one evaporator and a refrigerant tube (10) which enables the refrigerant fluid to be circulated, **characterized by**
- at least one retaining apparatus (12) which supports the part of the refrigerant tube (10) extending between the inner lining (5) and the outer wall (6), which has at least one passage (11) which enables the polyurethane injected into the space between the inner lining (5) and the outer wall (6) during the production to spread, and which supports the vacuum insulation panel (8) placed between the inner lining (5) and the outer wall (6).

2. A refrigerator (1) as in Claim 1, **characterized by** the retaining apparatus (12) which comprises a cylindrical channel (13) which is arranged at the hub thereof and which grips the refrigerant tube (10).

3. A refrigerator (1) as in Claim 1 or Claim 2, **characterized by** the retaining apparatus (12) comprises a plurality of blades (14) which extend outwards in the radial direction from the channel (13) and which have the passages (11) therebetween.

4. A refrigerator (1) as in Claim 3, **characterized by** the retaining apparatus (12) which is in the form of an impeller and which comprises six blades (14) separated by 60-degree angles.

5. A refrigerator (1) as in Claim 3, **characterized by** the retaining apparatus (12) which is in form of a hexagram.

6. A refrigerator (1) as in Claim 1 or Claim 3, **characterized by** the retaining apparatus (12) comprising a retaining member (16) which is placed onto at least two blades (14), which has an adhesion surface (15) whereon the vacuum insulation panel (8) is seated and which supports the vacuum insulation panel (8).

7. A refrigerator (1) as in Claim 6, **characterized by** the retaining apparatus (12) comprising the retaining member (16) in the form of a planar plate onto the top surface of which the vacuum insulation panel (8) is placed.

8. A refrigerator (7) as in Claim 7, **characterized by** the retaining apparatus (12) comprising a bracket (17) which is provided on the retaining member (16) and which bears against a corner of the vacuum insulation panel (8) so as to prevent the same from displacing

9. A refrigerator (1) as in Claim 6, **characterized by** the retaining apparatus (12) comprising the retaining member (16) which is in the form of a U which grips the top and bottom surfaces of the vacuum insulation panel (8) from an edge.
